(19) 

Europäisches
Patentamt

European
Patent Office

Office européen
des brevets

(11) **EP 4 641 867 A1**

(12) **EUROPEAN PATENT APPLICATION**
published in accordance with Art. 153(4) EPC

(43) Date of publication:
**29.10.2025 Bulletin 2025/44**

(21) Application number: **24836365.7**

(22) Date of filing: **05.07.2024**

(51) International Patent Classification (IPC):
*H02J 3/32* (2006.01)     *H02J 3/38* (2006.01)
*H02J 7/00* (2006.01)     *H02J 7/35* (2006.01)
*G06Q 50/06* (2024.01)

(52) Cooperative Patent Classification (CPC):
**G06Q 50/06; H02J 3/32; H02J 3/38; H02J 7/00;
H02J 7/35**

(86) International application number:
**PCT/KR2024/009523**

(87) International publication number:
**WO 2025/009918 (09.01.2025 Gazette 2025/02)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **05.07.2023 KR 20230086958**

(71) Applicant: **LG Energy Solution, Ltd.
Seoul 07335 (KR)**

(72) Inventor: **KIM, Daesoo
Daejeon 34122 (KR)**

(74) Representative: **BCKIP Part mbB
MK1
Landsbergerstraße 98, 3.Stock
80339 München (DE)**

(54) **OPERATION CONTROL DEVICE AND METHOD OF ENERGY STORAGE SYSTEM**

(57)     An operation control device according to an embodiment of the present invention is an operation control device of an energy storage system including a battery and linked to a power grid, and comprises: at least one processor; and a memory for storing at least one command executed through the at least one processor, wherein the at least one command may include commands for: in a state where power supply from the power grid is possible, configuring a power price linkage mode according to selection of an operator or a user; setting reference power for an inverter of the energy storage system according to the power price linkage mode; and transmitting the set reference power for the inverter to the inverter, and in the power price linkage mode, the charging and discharging of the energy storage system may be controlled according to the power price provided by the power grid.

[Figure 1]

EP 4 641 867 A1

## Description

[Technical Field]

This application claims priority to and the benefit of Korean Patent Application No. 10-2023-0086958 filed in the Korean Intellectual Property Office on July 5, 2023 the entire contents of which are incorporated herein by reference.

The present disclosure relates to an apparatus and method for controlling operation of an energy storage system, and more particularly, to an apparatus and method for controlling operation of a DC-coupled energy storage system.

[Background Art]

An energy storage system relates to renewable energy, a battery that stores electric power, and a power grid. Recently, as the spread of smart grid and renewable energy is expanding, the efficiency and stability of the power grid are being emphasized, and the demand for energy storage systems for power supplies with demand control and improved power quality is increasing. Depending on the purpose of use, energy storage systems may have different outputs and capacities. In order to configure a large-capacity energy storage system, a plurality of battery systems may be connected.

An energy storage system that is linked to a photovoltaic (PV) system is changing from AC-Coupled to DC-coupled energy storage system. In a DC-coupled ESS system, the PV system and battery system are DC voltage based, and the grid is AC voltage based, and thus, a power conversion device (e.g., inverter) can be required.

Meanwhile, in cases where the power environment changes in various ways, within the photovoltaic system and within the power grid that is linked to any DC-coupled energy storage systems, it is necessary to consider how to operate the system in an optimal state in response to these changes.

[Detailed Description]

[Technical Problem]

To obviate one or more problems of the related art, embodiments of the present disclosure provide an apparatus for controlling operation of an energy storage system.

To obviate one or more problems of the related art, embodiments of the present disclosure also provide a method for controlling operation of an energy storage system.

To obviate one or more problems of the related art, embodiments of the present disclosure also provide an energy storage system using the method for controlling operation of an energy storage system.

[Technical Solution]

In order to achieve the objective of the present disclosure, an apparatus for controlling operation of an energy storage system, which includes a battery and an inverter and is connected with a power grid, may include at least one processor; and a memory configured to store at least one instruction executed by the at least one processor, wherein the at least one instruction includes an instruction to, when power supply from the power grid is possible, set a power price linked mode according to a selection of an operator or a user; an instruction to set a reference power for the inverter of the energy storage system according to the power price linked mode; and an instruction to transmit the set reference power to the inverter.

Here, in the power price linked mode, charging and discharging of the energy storage system may be controlled according to a price of power provided by the power grid.

In more detail, in the power price linked mode, during battery discharging, discharge amount of the battery may be set to the highest amount when the power selling price is the highest and, during battery charging, charge amount of the battery may be set to the highest amount when the power purchase price is the lowest.

The instruction to set a reference power for the inverter of the energy storage system according to the power price linked mode may include an instruction to determine to perform discharging of the battery when the power purchase price exceeds a price set point; and an instruction to calculate discharge power to be used during battery discharging and to determine the reference power for the inverter.

Here, the discharge power to be used during battery discharging may be determined according to a ratio of a power selling price at the time of discharging to the highest power selling price gathered over a certain period of time.

The instruction to set a reference power for the inverter of the energy storage system according to the power price linked mode may include an instruction to determine to perform charging of the battery when the power purchase price is less than the price set point; and an instruction to calculate charge power to be used during battery charging and to determine the reference power for the inverter.

The charge power to be used during battery charging may be determined according to a ratio of the lowest power purchase price gathered over a certain period of time to a power purchase price at the time of charging.

Here, the price set point may be set as an average value of prices for purchasing power from the power grid in a certain period of time or the price set point is set by a user.

The instruction to set the power price linked mode may include an instruction to set the power price linked mode as a default mode in advance.

The at least one instruction may further include an instruction to select one of a plurality of on-grid operation modes excluding the default mode and the power price linked mode.

The plurality of on-grid operation modes excluding the default mode and the power price linked mode may include at least one of a self-consumption maximization mode, a user customized mode, an emergency mode, a battery usage maximization mode, and a battery protection mode.

The at least one instruction may further include an instruction to select one of a plurality of off-grid operation modes when power supply from the power grid is impossible, wherein the plurality of off-grid operation modes are operation modes that operate the energy storage system using at least one of a generator operation algorithm and a backup algorithm.

According to another embodiment of the present disclosure, a method for controlling operation of an energy storage system, which includes a battery and an inverter and connected with a power grid, may include, when power supply from the power grid is possible, setting a power price linked mode according to a selection of an operator or a user; setting a reference power for the inverter of the energy storage system according to the power price linked mode; and transmitting the set reference power for the inverter to the inverter. In the power price linked mode, charging and discharging of the energy storage system may be controlled according to a price of power provided by the power grid.

Here, in the power price linked mode, during battery discharging, discharge amount of the battery may be set to the highest when the power selling price is the highest and, during battery charging, charge amount of the battery may be set to the highest when the power purchase price is the lowest.

The setting the reference power for the inverter of the energy storage system according to the power price linked mode may include determining to perform discharging of the battery when the power purchase price exceeds a price set point; and calculating discharge power to be used during battery discharging and to determine the reference power for the inverter.

Here, the discharge power to be used during battery discharging may be determined according to a ratio of a power selling price at the time of discharging to the highest power selling price gathered over a certain period of time.

The setting the reference power for the inverter of the energy storage system according to the power price linked mode may include determining to perform charging of the battery when the power purchase price is less than the price set point; and calculating charge power to be used during battery charging and determining the reference power for the inverter.

The charge power to be used during battery charging may be determined according to a ratio of the lowest power purchase price gathered over a certain period of time to a power purchase price at the time of charging.

Here, the price set point may be set as an average value of prices for purchasing power from the power grid in a certain period of time or the price set point is set by a user.

The setting the power price linked mode may include setting the power price linked mode as a default mode in advance.

The method may further include selecting one of a plurality of on-grid operation modes excluding the default mode and the power price linked mode.

The plurality of on-grid operation modes excluding the default mode and the power price linked mode may include at least one of a self-consumption maximization mode, a user customized mode, an emergency mode, a battery usage maximization mode, and a battery protection mode.

The method may further include selecting one of a plurality of off-grid operation modes when power supply from the power grid is impossible, wherein the plurality of off-grid operation modes are operation modes that operate the energy storage system using at least one of a generator operation algorithm and a backup algorithm.

The plurality of off-grid operation modes are operation modes that operate the energy storage system using at least one of a generator operation algorithm and a backup algorithm.

According to another embodiment of the present disclosure, an energy storage system, which includes a battery and is connected to a power grid, may include an operation control apparatus configured to, when power supply from the power grid is possible, set a power price linked mode according to a selection of an operator or a user, set a reference power for the inverter of the energy storage system according to the power price linked mode, and transmit the set reference power for the inverter to the inverter; and an inverter configured to perform charge/discharge control on the battery according to reference power received from the operation control apparatus, wherein, in the power price linked mode, charging and discharging of the energy storage system is controlled according to a price of power provided by the power grid.

In the power price linked mode, during battery discharging, discharge amount of the battery may be set to the highest when the power selling price is the highest and, during battery charging, charge amount of the battery may be set to the highest when the power purchase price is the lowest.

The operation control apparatus may determine to perform discharging of the battery when the power purchase price exceeds a price set point and calculates discharge power to be used during battery discharging and to determine the reference power for the inverter and the operation control apparatus may determine to perform charging of the battery when the power purchase price is less than the price set point and calculates charge power to be used during battery charging and determining the reference power for the inverter.

Here, the discharge power to be used during battery discharging may be determined according to a ratio of a power selling price at the time of discharging to the highest power selling price gathered over a certain period of time.

In addition, the charge power to be used during battery charging may be determined according to a ratio of the lowest power purchase price gathered over a certain period of time to a power purchase price at the time of charging.

The battery and the inverter are connected to a renewable energy generation system via a direct current (DC) link.

[Advantageous Effects]

According to embodiments of the present disclosure, in an energy storage system, particularly an energy storage system that is linked with a photovoltaic system in a DC-coupled form, the system can be operated in an optimal state by appropriately responding to various changes in the power environment, such as changes in the price of power provided by a power grid.

[Brief Description of theDrawings]

FIG. 1 is a block diagram of a PV system-linked DC-coupled energy storage system to which the present disclosure may be applied.
FIG. 2 is an example of an operation control method of the energy storage system according to embodiments of the present disclosure.
FIG. 3 is a flowchart of an off-grid mode selection method of an energy storage system according to embodiments of the present disclosure.
FIG. 4 is a flowchart of an on-grid mode selection method of the energy storage system according to embodiments of the present disclosure.
FIG. 5 is a flowchart of a method for calculating inverter reference power in the energy storage system according to embodiments of the present disclosure.
FIG. 6 is a conceptual diagram of operation of the energy storage system based on the power price linked mode according to embodiments of the present disclosure.
FIG. 7 is a flowchart of an operation method in the power price linked mode according to embodiments of the present disclosure.
FIG. 8 is an example of a power price fluctuation graph for explaining the charging and discharging operation of the energy storage system based on the power price linked mode according to embodiments of the present disclosure.
FIG. 9 is a flowchart of an operation control method of the energy storage system according to embodiments of the present disclosure based on the power price linked mode.
FIG. 10 is a block diagram of an operation control apparatus of the energy storage system according to embodiments of the present disclosure.

| | |
|---|---|
| 100: | battery |
| 300: | operation control apparatus (gateway) |
| 400: | power conversion apparatus/inverter |
| 600: | grid |
| 700: | photovoltaic (PV) system |

[Best Modes for Practicing the Disclosure]

The present disclosure may be modified in various forms and have various embodiments, and specific embodiments thereof are shown by way of example in the drawings and will be described in detail below. It should be understood, however, that there is no intent to limit the present disclosure to the specific embodiments, but on the contrary, the present disclosure is to cover all modifications, equivalents, and alternatives falling within the spirit and technical scope of the present disclosure. Like reference numerals refer to like elements throughout the description of the figures.

It will be understood that, although the terms such as first, second, A, B, and the like may be used herein to describe various elements, these elements should not be limited by these terms. These terms are only used to distinguish one element from another. For example, a first element could be termed a second element, and, similarly, a second element could be termed a first element, without departing from the scope of the present disclosure. As used herein, the term "and/or" includes combinations of a plurality of associated listed items or any of the plurality of associated listed items.

It will be understood that when an element is referred to as being "coupled" or "connected" to another element, it can be directly coupled or connected to the other element or an intervening element may be present. In contrast, when an element is referred to as being "directly coupled" or "directly connected" to another element, there is no intervening element present.

The terms used herein is for the purpose of describing specific embodiments only and are not intended to limit the present disclosure. As used herein, the singular forms "a", "an" and "the" are intended to include the plural forms as well, unless the context clearly indicates otherwise. It will be further understood that the terms "comprises", "comprising", "includes", "including" and/or "having", when used herein, specify the presence of stated features, integers, steps, operations, constitutional elements, components and/or combinations thereof, but do not preclude the presence or addition of one or more other features, integers, steps, operations, constitutional elements, components, and/or combinations thereof.

Unless otherwise defined, all terms used herein, including technical and scientific terms, have the same meanings as commonly understood by one skilled in the art to which the present disclosure belongs. It will be further understood that terms, such as those defined in commonly used dictionaries, should be interpreted as having meanings that are consistent with their meanings in the context of the relevant art and will not be interpreted in an idealized or overly formal sense unless expressly so defined herein.

Some terms used herein are defined as follows.

State of Charge (SOC) refers to a current state of charge of a battery, represented in percent points [%], and State of Health (SOH) may be a current condition of a battery compared to its ideal or original conditions, represented in percent points [%].

A power limit refers to a limit of power that can be output from a battery, which is set in advance by a battery manufacturer based on a battery condition. The power limit can be a charge power limit or a discharge power limit depending on whether charging or discharging is applied.

Hereinafter, exemplary embodiments of the present disclosure will be described in detail with reference to the accompanying drawings.

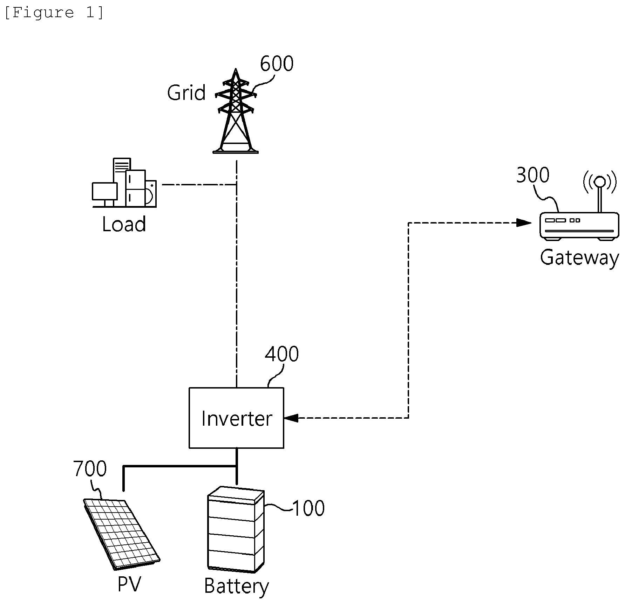

FIG. 1 is a block diagram of a PV system-linked DC-coupled energy storage system to which the present disclosure may be applied.

FIG. 1 shows an example of a DC coupled system in which the output terminal of a photovoltaic((PV) system (700)) and the output terminal of a battery (100) are connected on a DC link, and the DC link and a DC terminal of an inverter (400) are connected. An AC link of the inverter (400) is connected to the grid (700) and may receive power from the grid (700) or provide power to the grid (700). The AC link of the inverter (400) is also connected to a load, and power supplied from the PV system (700) or the battery (100) can be provided to a load.

Here, the photovoltaic system is used as an example of a power generation system using renewable energy, and the present disclosure may be applied to power generation systems that utilize various renewable energies(renewable energy sources) such as wind energy, geothermal energy, bioenergy, and ocean energy, as well as photovoltaic systems. Therefore, in this specification, the photovoltaic system may be understood as one of the renewable energy generation systems, and the PV power generation can be interpreted as the renewable energy generation.

The battery (100) is used for storing power. Typically, multiple battery packs may form a battery rack and multiple battery racks may form a battery bank. Here, depending on the device or system in which the battery is used, the battery pack may be referred to as a battery module.

In a DC-coupled energy storage system, a DC/DC converter that can individually control the DC voltage/current for each battery system may be required. Since the DC/DC converter is placed in the battery system, a DC/AC converter used for connecting with a photovoltaic system is no longer needed, thereby increasing efficiency. In addition, by applying the DC/DC converter to each battery system, protection control of the existing battery system is not only possible, but also, it is possible to control the battery power by considering the characteristics of each battery system, even if there is a difference in SOC, SOH, and capacity among battery racks.

Here, a battery management system (BMS) may be installed for each battery. The BMS may monitor the current, voltage, and temperature of each battery rack (or pack), calculate a state of charge(SOC) based on monitoring results, and control charging and discharging.

The photovoltaic (PV) system (700) may include a plurality of unidirectional solar modules capable of generating electricity that are connected in series and parallel. The output terminal of the PV system (700) is connected to a battery (100) and an inverter (400) via a DC link. Meanwhile, a reverse current prevention device may be placed on the DC link connected to the PV system (700) to prevent reverse current from flowing to the solar module.

The inverter (400) may also be referred to as a power conditioning system (PCS), and it may control power supplied from the outside as well as power supplied from the battery section to the outside. The inverter (400) may typically be implemented in the form of a DC/AC inverter. Meanwhile, the inverter (400) may include a power management system (PMS), and the power management system may report the monitoring results of the BMS to the gateway (300) and receive information on inverter reference power from the gateway (300) to control the inverter output.

Meanwhile, the inverter (400) may be connected to the gateway (300) through communication links using a controller area network(CAN) or Ethernet (indicated by a dotted line in FIG. 1). The gateway (300) may perform an energy management system (EMS) function, monitor the inverter (400), provide information on the operation of the energy storage system received from the PMS in the inverter to a user, and transmit control commands related to energy or power usage to the inverter (400). Therefore, the gateway (300) may include a user interface. Here, the gateway (300) may be understood as an example of an operationcontrol apparatus of an energy storage system according to the present disclosure.

In this specification, the energy storage system may be understood as a concept including a battery (100) and an inverter (400), or a concept including a battery (100), an inverter (400), and a gateway (300).

Meanwhile, the commands related to energy or power usage may include information on power usage mode and operation mode of the energy storage system and the PMS may operate according to the power usage mode and the operation mode received from the gateway (300).

More specifically, the inverter (400) basically operates according to the power usage mode received from the gateway. For example, the operation state of the inverter may vary depending on whether the power usage mode is set to a passive mode or an active mode. In the active mode, the inveter operates with the highest priority on charging the battery, and energy is used to charge the battery to the charging limit as a highest priority. The passive mode is a mode in which battery power is naturally determined according to power situations of the grid and the PV system.

More specifically, if the power usage mode is set to a passive mode, in which generated power by the PV system = 7kW, power to be consumed by the load = 3kW, the battery charge limit power (BAT Ch Limit) = 2kW, and the grid export power limit = 0W, then 3kW of the power produced by the PV system is supplied to the load and 2kW is used to charge the battery. The remaining power of 2kW cannot be supplied to the grid due to the set grid export limit power, and the information is fed back to the PV system to cause the PV system to reduce power generation by the remaining power. Here, the export limit power means limit power that can be exported to the grid.

On the other hand, if the power usage mode is set to an active mode, in which generated power by the PV system = 2 kW, power to be consumed by the load = 3 kW, the battery charging limit power (BAT Ch Limit) = 7 kW, and the grid transfer limit power = 0 W, then 2 kW of the power produced by the PV system and 5 kW of the power supplied from the grid are all used to charge the battery. In addition, the remaining 3 kW of the power supplied from the grid can be supplied to the load.

Meanwhile, the inverter (400) may also receive information on the operation mode of the energy storage system from the gateway and control the output of the inverter according to the operation mode. According to a preferred embodiment of the present disclosure, the energy storage system, including a battery and being connected to a power grid, may include an operation control apparatus configured to, when power supply from the power grid is possible, set a power price linked mode according to a selection of an operator or a user, set a reference power for the inverter of the energy storage system according to the power price linked mode, and transmit the set reference power for the inverter to the inverter; and an inverter may be configured to perform charge/discharge control on the battery according to reference power received from the operation control apparatus.

Here, in the power price linked mode, during battery discharging, the discharge amount of the battery is set to its highest when the power selling price is the highest, and, during battery charging, the charge amount of the battery is set to its highest when the power purchase price is the lowest.

The operation control apparatus, for example, the gateway (300), may determine to perform discharging of the battery when the power purchase price exceeds a price set point, calculate discharge power to be used during battery discharging, determine the reference power for the inverter, may determine to perform charging of the battery when the power purchase price is less than the price set point, calculate charge power to be used during battery charging, and determine the reference power for the inverter.

The discharge power to be used during battery discharging is determined according to a ratio of a power selling price at the time of discharging to the highest power selling price gathered over a certain period of time.

In addition, the charge power to be used during battery charging is determined according to a ratio of the lowest power purchase price gathered over a certain period of time to a power purchase price at the time of charging.

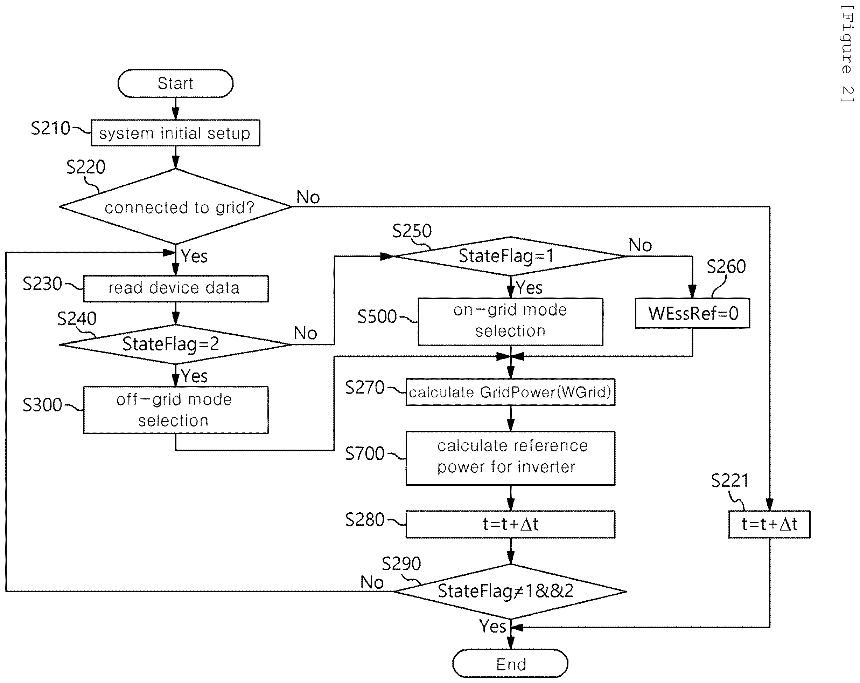

FIG. 2 is an example of an operation control method of the energy storage system according to embodiments of the present disclosure.

Referring to FIG. 2, the energy storage system may perform system initial setup for operation (S210). During the system initial setup process, a gateway ID and a droop parameter may be received from a gateway, and setup information regarding a grid code value, inverter selection information when multiple inverters are included, and inverter parallel operation can be received from an application.

When the system initial setup is completed, it can be checked whether the system is connected to the grid, i.e., whether it is in an on-grid state (S220). If it is in an on-grid state, data related to each device is read and can be obtained (S230). Here, the data related to each device may include data related to an inverter, a battery, a backup box, and an application. Here, the backup box may be a switch device that monitors the grid state and switches the state of the system from on-grid to off-grid when any abnormality occurs in the grid.

Afterwards, the system may check whether the system is off-grid (S240) or on-grid (S250) to recognize and respond to a case where an abnormality occurs in the grid. In FIG. 2, if the grid is off-grid due to an abnormality, the state flag (StateFlag) is set to "2", and if it is on-grid, the state flag (StateFlag) is set to "1".

In the case of off-grid (Yes in S240), the off-grid mode selection algorithm may be performed (S300), and in the case of on-grid (Yes in S250), the on-grid mode selection algorithm may be performed (S500). In the case of neither off-grid nor on-grid, the system is considered not to be operating, and the ESS reference power (WEss-Ref) value to be transmitted by the gateway to the inverter is set to "0" (S260). In other words, since it does not correspond to any operation mode at that stage, the ESS reference power is set to 0 to prevent the battery from charging and discharging.

Subsequently, the grid power may be calculated using information on values of current and power, the current flowing in the link connected to the grid (S270).

The energy storage system may calculate reference power for the inverter using information such as calculated grid power, battery power reference, battery limit power, and grid limit power (S700).

The energy storage system may check communication cycle (S280, S221), and may repeat the procedure described above according to the communication cycle, if the system is operating (No in S290).

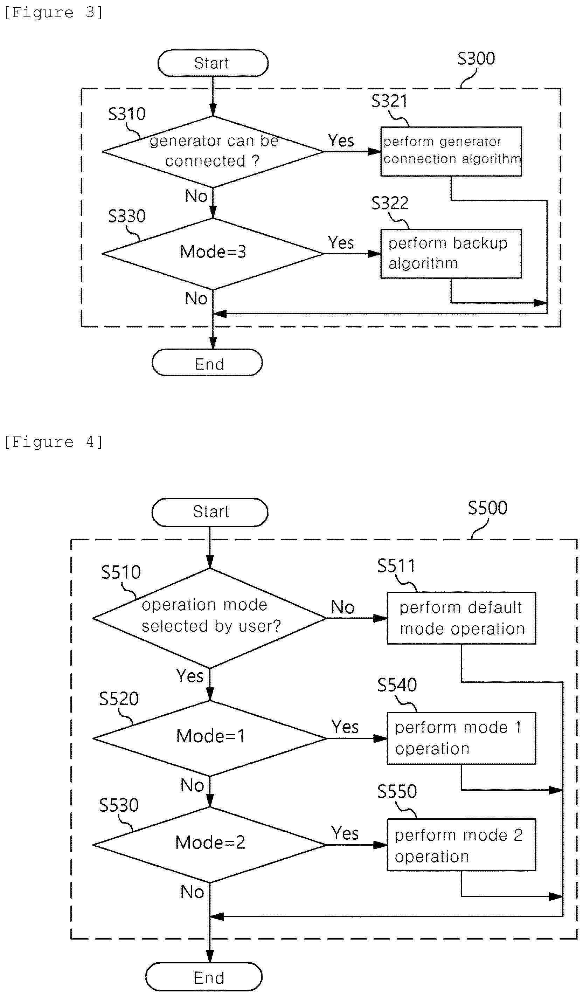

FIG. 3 is a flowchart of an off-grid mode selection method of an energy storage system according to embodiments of the present disclosure.

In FIG. 3, the off-grid mode selection algorithm or method (S300) which was briefly described in the flowchart of the overall operation control method of FIG. 2 is examined in more detail.

If the system is determined as in an off-grid state due to a grid failure, etc., it may be checked whether a generator can be connected (S310). If the generator can be connected (Yes in S310), the generator connection algorithm may be performed (S321) to connect the system to the generator and the system may operate in generator operation mode.

Here, in order to prevent overload of a diesel generator due to a sudden increase in power demand of the load when off-grid, the generator can be operated by expanding the allowable range of frequency and voltage. If the generator is overloaded, it is difficult to maintain the rated frequency and voltage of the generator, and the life of the generator may be reduced or the fuel supply to the generator may be insufficient due to the overload. Therefore, in order to save the life of the generator and fuel costs, the rotation speed of the generator can be increased to increase the voltage, and it is desirable for the gateway to operate the generator by expanding the frequency and voltage allowable range.

If the generator cannot be connected, it is determined whether it is mode 3 (S330) and a backup algorithm can be performed (S322). Here, mode 3 can be defined as a backup mode. When a grid fault occurs, the mode that was in operation may be automatically switched to the backup mode and the battery may respond to the load by discharging to supply power which is required by the load. Here, the minimum SOC value can be set and controlled in relation to the maximum dischargeable capacity. The minimum SOC value may be set to, for example, 20%.

For example, assuming that PV generation power = 4kW, load demand power = 7kW, and BAT SOC = 50%, if a grid fault occurs while operating in a default mode (for example, MSC (Max. Self-Consumption) Mode), the grid relay is turned off. Then, the entire 4kW of PV generation power is supplied to the load and the battery is additionally discharged to supply the remaining 3kW of needed power to the load.

FIG. 4 is a flowchart of an on-grid mode selection method of the energy storage system according to embodiments of the present disclosure.

In FIG. 4, the on-grid mode selection algorithm or method (S500) which was briefly described in the flowchart of the overall operation control method of FIG. 2 is examined in more detail.

If the system is determined to be in an on-grid state, it is first checked whether one of the operation modes has been selected by a user (S510). If the operation mode has been selected, a procedure for checking which mode is selected is performed (S520, S530).

If the selected mode is mode 1, operations according to mode 1 may be performed (S540), and if the selected mode is mode 2, operations according to mode 2 may be performed (S550).

In this embodiment, mode 1 may be a power price-linked mode in which a DC-coupled system is operated by controlling charging and discharging of the energy storage system according to a price of power provided by the power grid. In other words, in a way that automatically controls the charging/discharge power according to a ratio of the grid price, the control apparatus (e.g., gateway) may perform charging/discharging in response to the price even if the user does not set the charging/discharge power. Meanwhile, in the present disclosure, the power price linked mode may be set by a user's selection at the time of use of the energy storage system, but may also be set as a default mode in advance by a system manager, an operator, or a user, etc.

Here, the default value of a price set point that determines charging or discharging may be set as an average value of power prices aggregated within a certain time period, and may be changed by a user. In addition, according to embodiments of the present disclosure, in the power price linked mode, discharge amount of the battery is set to the highest amount when the power selling price is the highest and charge amount of the battery is set to the highest amount when the power purchase price is the lowest.

Meanwhile, in this embodiment, Mode 2 may include one or more of Max Self-Consumption (MSC) mode, user customized mode, emergency ready mode, battery use maximization mode, and battery protection mode.

In the Max Self-Consumption (MSC) mode, depending on amount of PV generation and power demand of the load, surplus power may be charged to the battery and sold to the grid, or power may be supplied to the load through battery discharge and through purchasing power from the power grid.

More specifically, in the MSC mode, when PV > LOAD, the PV generation is used for the load, surplus power is charged to the battery, and if there is still residual power, energy may be sold to the grid. When PV < LOAD, the PV generation is used for the load, power is supplied to the load through battery discharge, and if more power is still needed for the load, power can be purchased and supplied from the grid. In other words, in the MSC mode, the system is operated so that the power purchased from the grid is minimized. In addition, battery charging and discharging may be performed through droop control with a DC voltage determined by PV and LOAD.

The user customized mode may include a mode in which the user directly sets the details of charge/-discharge schedule and operates the system, a mode in which the system is operated according to one mode selected by the user among multiple operation modes provided by the system, etc. In the mode in which the user directly sets the details of the charge/discharge schedule and operates the system, the system may be operated according to the charge/discharge time schedule directly designated by the user. In addition, the user may check the grid power price, decide the charge/discharge schedule, and input it into the application (App) to operate the system.

The emergency ready mode is a mode in which the system waits with the battery charged to 100% in a situation in which a power outage plan such as a hurricane or typhoon is announced in advance. For example, in the event of an abnormal weather forecast for the next day, the battery may be charged using PV generation and power from the grid until the state of charge reaches 100%, in preparation.

Furthermore, the battery use maximization mode is a mode that uses the battery as much as possible. In battery use maximization mode, if there is PV generation, power generated by the PV system is used to charge the battery, and if PV generation is less than the battery full power, the power difference may be charged from the grid. On the other hand, if there is no PV generation, the battery may be discharged with full power and used for the load, and the remaining energy may be sold to the grid. Here, charging the battery with grid power and selling power to the grid are both allowed only in areas where such activities are permitted.

The battery protection mode is also available in areas where purchasing and selling grid power is allowed. The battery protection mode is a mode that restricts battery use as much as possible based on comparison result of PV power generation and load power demand when extending the battery life is required while power supply from the power grid is possible.

On the other hand, if any operation mode is not selected, the operation of the mode set as the default may be performed (S511).

The default mode is a mode that is selected by default when no mode selection is made by the user. According to embodiments of the present disclosure, the power price linked mode which is described above as mode 1 or the MSC mode among mode 2 may be set as the default mode.

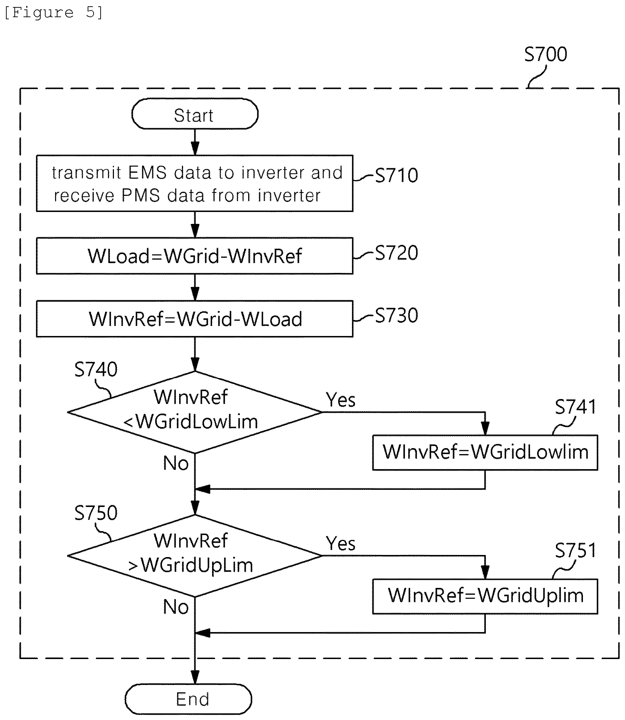

FIG. 5 is a flowchart of a method for calculating inverter reference power in the energy storage system according to embodiments of the present disclosure.

The operation method illustrated in FIG. 5 may be performed by an operation control apparatus of an energy storage system, for example, a gateway. However, the operating subject of the operation method of the energy storage system according to embodiments of the present disclosure is not limited to the gateway.

The operation control apparatus may transmit EMS data to the inverter and receive PMS data from the inverter (S710). In other words, the operation control apparatus may collect information necessary to calculate the power reference of the inverter.

The operation control apparatus may calculate the inverter reference power (WInvRef) as (WInvRef = WGrid-WLoad) (S730) by utilizing the fact that the power supplied to the load (WLoad) is determined from the grid power and the inverter reference power (WInvRef) (S720).

Afterwards, it is checked whether the inverter reference power is less than grid export lower limit (WGridLowLim) (S740), and if so, the inverter reference power is set to the grid export lower limit (S741). This is because if there is a limited range on the amount of power that is exported to the grid depending on the country or region, power export outside the range is not allowed.

In the same vein, it is checked whether the inverter reference power exceeds the grid purchase upper limit (WGridUpLim) (S750), and if so, the inverter reference power is set to the grid purchase upper limit (S751).

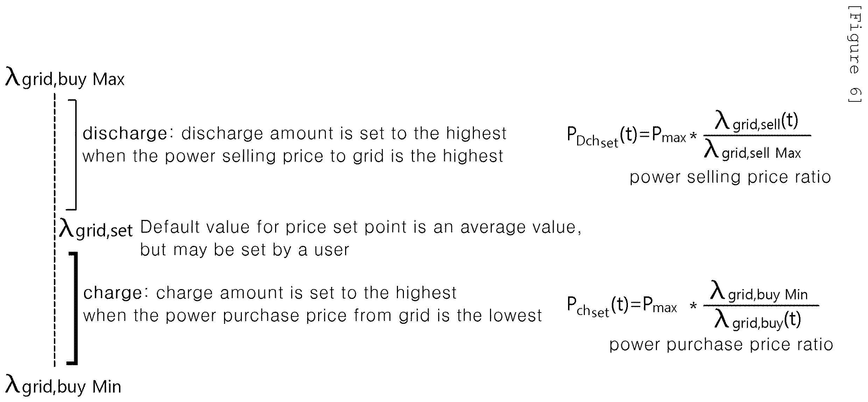

FIG. 6 is a conceptual diagram of operation of the energy storage system based on the power price linked mode according to embodiments of the present disclosure.

The power price linked mode according to embodiments of the present disclosure is a mode that controls charging and discharging of the energy storage system according to the power price provided by the power grid.

Referring to FIG. 6, the price set point (Price Set Point; $\lambda_{grid,Set}$) defined in the power price linked mode is a value that determines whether the battery in the energy storage system will perform charging or discharging. The energy storage system may perform a battery discharge when the power price of the grid exceeds the price set point and may perform a battery charge when the power price of the grid is below the price set point. The default value of the price set point may be set to an average value of the power purchase prices ($\lambda_{grid,buy}$) collected within a certain time period and may be changed by a user. For example, the price set point may be set to an average value of the power purchase prices collected within a certain time period (for example, 24 hours).

In the operation according to the power price linked mode, the amount of battery discharge when discharging the battery may be determined according to a power selling price ratio. Accordingly, the discharge amount of the energy storage system may be set to the highest when the power selling price to the power grid is the highest.

The discharge amount of the battery determined by the power selling price ratio may be defined as the following equation 1.

【Equation 1】

$$P_{Dch_{set}}(t) = P_{\max} \times \frac{\lambda_{grid,sell}(t)}{\lambda_{grid,sellMax}}$$

In equation 1, $P_{Dchset}(t)$ represents real-time discharge power of the battery, $P_{max}$ represents the discharge limit power or maximum discharge power of the battery, $\lambda_{grid,sell}(t)$ represents a real-time power selling price to the grid, and $\lambda_{grid,sellMax}$ represents the maximum power selling price.

In other words, in the power price linked mode according to embodiments of the present disclosure, the discharge power when discharging the battery may be determined according to the ratio of the power selling price at the time of discharging to the maximum power selling price identified in a certain period of time, and may be calculated by considering the discharge limit power of the battery.

Meanwhile, according to embodiments of the present disclosure, the charge amount of the battery in the power price linked mode may be determined according to power purchase price ratio. Accordingly, when the price for purchasing power from the power grid is the lowest, the charge amount of the energy storage system may be set to the highest amount.

In the operation according to the power price linked mode, the charge amount of the battery determined according to the power purchase price ratio may be defined as the following equation 2.

【Equation 2】

$$P_{ch_{set}}(t) = P_{max} \times \frac{\lambda_{gridbuyMin}}{\lambda_{gridbuy}(t)}$$

In equation 2, $P_{chset}(t)$ represents real-time charge power of the battery, $P_{max}$ represents the charging limit power or maximum charge power of the battery, $\lambda_{grid,buy}(t)$ represents a real-time power purchase price, and $\lambda_{grid,buyMin}$ represents the lowest power purchase price within a certain time period.

In other words, in the power price linked mode according to embodiments of the present disclosure, the charge power when charging the battery may be determined according to the ratio of the lowest power purchase price confirmed in a certain time period to the power purchase price at the time of charging, and can be calculated by considering the charging limit power of the battery.

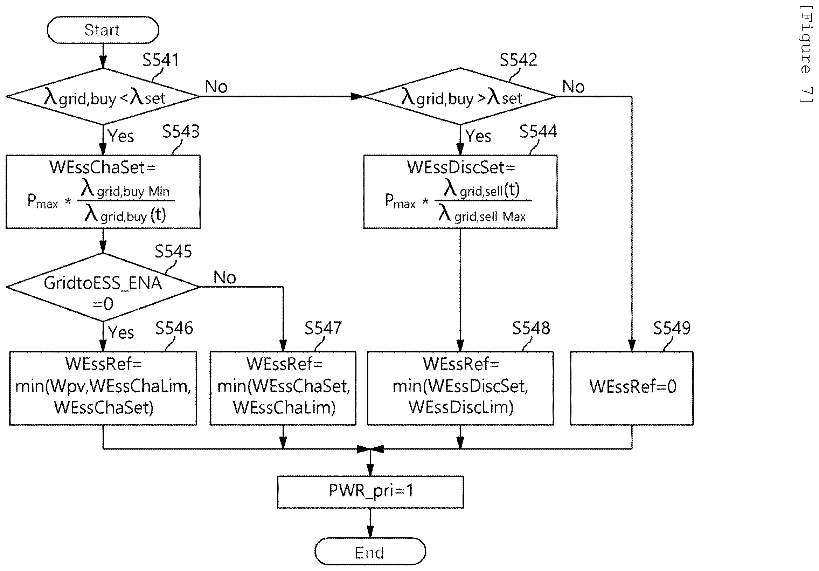

FIG. 7 is a flowchart of an operation method in the power price linked mode according to embodiments of the present disclosure.

The operation method illustrated in FIG. 7 may be performed by an operation control apparatus of an energy storage system, for example, a gateway. However, the operating subject of the operation method of the energy storage system according to embodiments of the present disclosure is not limited to the gateway.

Referring to FIG. 7, the operation control apparatus may monitor the power purchase price, i.e., the price ($\lambda_{grid,buy}$) for purchasing power by a user or consumer. If the power purchase price is less than the price set point (Yes in S541), battery charging in the system may be determined, and the charge power (WEssChaSet) may be calculated (S543). Here, the charge power may be defined according to the equation 2 discussed above. In other words, the charge amount of the battery may be determined according to the power purchase price ratio in the power price linked mode according to embodiments of the present disclosure. Accordingly, the charge amount of the energy storage system may be set to the highest amount when the price for purchasing power from the power grid is the lowest.

Afterwards, it is checked whether the energy storage system may be charged by receiving power from the grid (S545). This is because, when charging the ESS (or battery), whether charging is allowed only by power supplied from the PV system, or whether charging the ESS by power supplied from the grid is also allowed, varies depending on the country and region. If the value of the parameter "GridtoESS_ENA" in step S545 of FIG. 7 is **"0"**, charging the ESS using grid power is not possible.

If the ESS cannot be charged by receiving power from from the grid (Yes in S545), the reference power *(WEssRef)* of the ESS is set to *"WEssRef = min(Wpv, WEssChaLim, WEssChaSet)"* (S546). In other words, the minimum value among the PV generation amount, battery charge limit power, and a set battery charge power value is set as the reference power of the ESS.

On the other hand, if the ESS can be charged by receiving power from the grid (No in S545), the smaller value between the charge power, when purchasing power from the grid, and the battery charge limit, may be set as the reference power of the ESS (*WEssRef = min(WEssChaSet, WEssChaLim)*) (S547). For example, if charging the ESS using grid power is possible, PV generation amount = 1kW, battery charge limit = 2kW, and the calculated and set battery charge power = 3kW, the battery charge power may be determined as 2kW which is the minimum value among these and more required power of 1kW in addition to the 1kW of PV generation power may be brought in from the grid to charge the battery.

Somehow, when the power purchase price ($\lambda_{grid,buy}$) exceeds the price set point (Yes in S542), battery discharging in the system may be determined, the ESS discharge power (WEssDiscSet) may be calculated (S544), and the calculated discharge power may be compared with the discharge limit of the battery, and the smaller value may be set as the reference power of the ESS (S548).

Here, the discharge power may be defined according to Equation 1 discussed above. In other words, in the power price linked mode, the discharge power of the battery may be determined according to the power selling price ratio. Accordingly, the discharge amount of the energy storage system may be set to the highest amount when the power selling price to the power grid is the highest.

Thereafter, the system may set the power usage mode to active mode (PWR_pri = 1) to ensure that the battery maintains the ESS reference power value and may terminate the procedure. Meanwhile, the ESS reference power used in the flowchart of FIG. 7 may be understood to have the same or similar meaning as the inverter reference power used in other parts of this specification.

Meanwhile, although not shown in FIG. 7, the power price linked mode according to the present disclosure may operate in SOC operation range agreed upon with the DR (Demand Response) program. Here, the demand response (DR) means changing grid power usage by controlling power resources to meet demand response request.

For example, the control apparatus according to the present disclosure may receive a DR signal from the Utility (or virtual power plant (VPP)) in real time, operate according to a DR command when the DR signal changes from 0 to **1,** and operate the system by switching back to the power price linked mode when the DR signal changes from = 1 to 0.

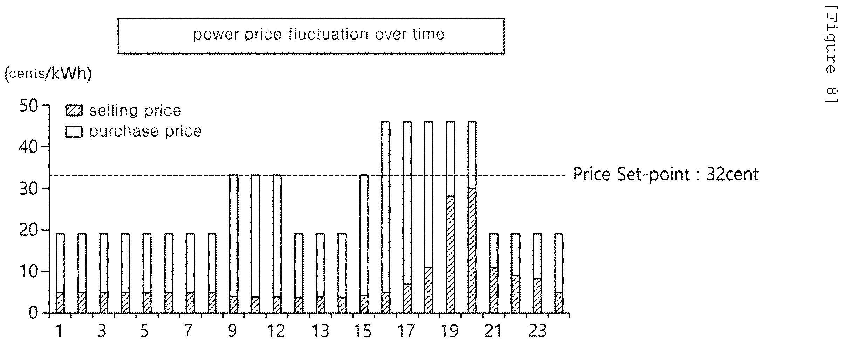

FIG. 8 is an example of a power price fluctuation graph for explaining the charging and discharging operation of the energy storage system based on the power price linked mode according to embodiments of the present disclosure.

The graph of FIG. 8 is a graph showing an example of a power selling price and a power purchase price that change over 24 hours, and shows an example in which the price set point according to the power price linked mode of the present disclosure is set to 32 cents.

The energy storage system according to the present disclosure may determine to perform discharging in a time section in which the power purchase price exceeds the price set point. In the graph of FIG. 8, the power purchase price exceeds the price set point in the time section of 16:00 to 20:00. Therefore, the energy storage system may perform battery discharging in that time section.

In the example of FIG. 8, the highest power selling price is 30 cents, and assuming, for example, that PV generation = 0 kW, load demand = 7 kW, and BAT discharge limit power = 7 kW, the discharge power in each time section may be calculated according to the equation 1 discussed above. More specifically, the discharge power in each time section may be calculated as 16h: 7kW * (5/30) = 1.17kW, 17h: 7kW * (7/30) = 1.63kW, 18h: 7kW * (10/30) = 2.33kW, 19h: 7kW * (28/30) = 6.53kW, 20h: 7kW * (30/30) = 7kW. Accordingly, the energy storage system according to the present disclosure may supply power to the load by discharging the battery at 6.53kW of power at 19:00, for example, and purchase the remaining 0.47kW required by the load from the grid and supply it to the load.

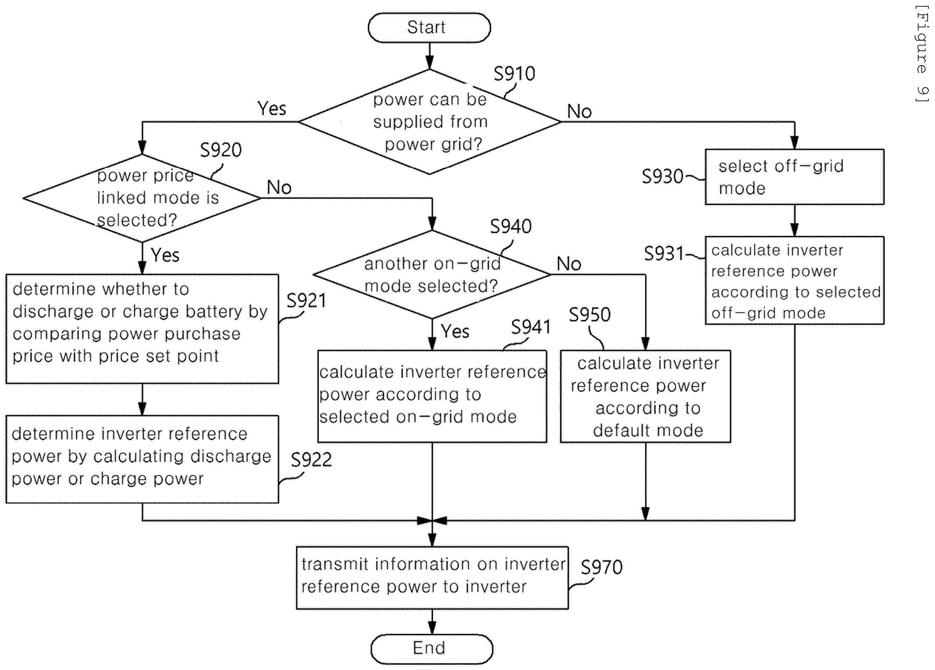

FIG. 9 is a flowchart of an operation control method of the energy storage system according to embodiments of the present disclosure based on the power price linked mode.

The operation control apparatus of the energy storage system according to embodiments of the present disclosure may first check whether the energy storage system is in a state where power can be supplied from the power grid (S910). If the power price linked mode is set by selection of an operator or a user in a state where power can be supplied from the power grid (Yesin S920), the reference power for the inverter of the energy storage system may set according to the power price linked mode. More specifically, the power purchase price is compared with the price set point to determine whether to discharge or charge the battery (S921), and the inverter reference power is determined by calculating the discharge power or the charge power (S922). Meanwhile, the power price linked mode may be set as a default mode in advance by the operator or user.

In the power price linked mode, the charging and discharging of the energy storage system may be controlled according to a power price provided by the power grid. In other words, in the power price linked mode, during battery discharging, discharge amount of the battery may set to the highest amount when the power selling price is the highest, and, during battery charging, charge amount of the battery may be set to the highest amount when the power purchase price is the lowest.

More specifically, the discharge power to be used during battery discharging is determined according to a ratio of a power selling price at the time of discharging to the highest power selling price gathered over a certain period of time. In addition, the charge power to be used during battery charging is determined according to a ratio of the lowest power purchase price gathered over a certain period of time to a power purchase price at the time of charging.

In addition, the price set point may be set as an average value of the prices for purchasing power from the power grid during a certain period of time or may be set by a user.

Meanwhile, if the energy storage system is in a state where power supply from the power grid is possible, but the power price linked mode is not selected and another on-grid mode is selected (Yesin S940), the inverter reference power according to the selected on-grid mode may be calculated (S941). Here, the on-grid operation mode, excluding the power price linked mode, may include one or more of the self-consumption maximization mode, the user customized mode, the emergency mode, the battery usage maximization mode, and the battery protection mode.

However, if the energy storage system is in a state where power supply from the power grid is possible, but the power price linked mode is not selected and another on-grid mode is not selected (No in S940), the default mode may be set, and the inverter reference power according to the default mode may be calculated (S950). Meanwhile, if the power price linked mode is preset as the default mode in the flowchart of FIG. 9, step S950 is not necessary.

Meanwhile, going back to step 910, if power supply from the power grid to the energy storage system is not possible (NO in S910), an off-grid mode is selected (S930), and the inverter reference power according to the selected off-grid mode may be calculated (S931). The off-grid mode may be a mode for operating the energy storage system using one of the generator operation algorithm and the backup algorithm.

After that, information on the inverter reference power, calculated according to each mode, may be transmitted to the inverter (S970) and may be utilized when performing charging and discharging of the battery.

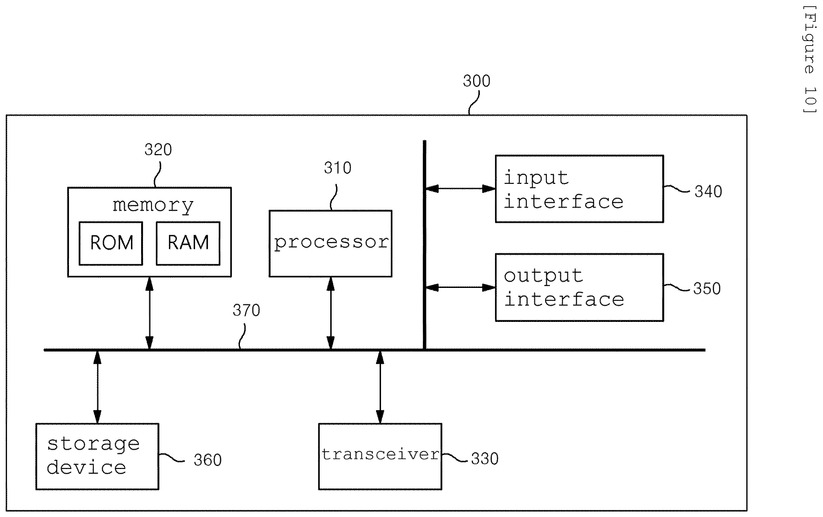

FIG. 10 is a block diagram of an operation control apparatus of the energy storage system according to embodiments of the present disclosure.

The operation control apparatus (300) of the energy storage system may include at least one processor (310), a memory (320) storing at least one instruction executed by the processor, and a transceiver (330) which is a communication module connected to a network and performing communication. Here, the operation control apparatus (300) may be a gateway located in the energy storage system.

Here, at least one processor may be referred to as a control unit, a controller, an micro control unit (MCU), etc., and may include a central processing unit (CPU), a graphics processing unit (GPU), or a dedicated processor on which methods according to embodiments of the present disclosure are performed.

Meanwhile, the at least one instruction executed by the processor may include an instruction to, when power supply from the power grid is possible, set a power price linked mode according to a selection of an operator or a user; an instruction to set a reference power for the inverter of the energy storage system according to the power price linked mode; and an instruction to transmit the set reference power to the inverter.

Here, in the power price linked mode, charging and discharging of the energy storage system may be controlled according to a price of power provided by the power grid.

In more details, in the power price linked mode, during battery discharging, a discharge amount of the battery may be set to the highest amount when the power selling price is the highest and, during battery charging, a charge amount of the battery may be set to the highest amount when the power purchase price is the lowest.

The instruction to set a reference power for the inverter of the energy storage system according to the power price linked mode may include an instruction to determine to perform discharging of the battery when the power purchase price exceeds a price set point; and an instruction to calculate discharge power to be used during battery discharging and to determine the reference power for the inverter.

Here, the discharge power to be used during battery discharging may be determined according to a ratio of a power selling price at the time of discharging to the highest power selling price gathered over a certain period of time.

The instruction to set a reference power for the inverter of the energy storage system according to the power price linked mode may include an instruction to determine to perform charging of the battery when the power purchase price is less than the price set point; and an instruction to calculate charge power to be used during battery charging and to determine the reference power for the inverter.

The charge power to be used during battery charging may be determined according to a ratio of the lowest power purchase price gathered over a certain period of time to a power purchase price at the time of charging.

Here, the price set point may be set as an average value of prices for purchasing power from the power grid in a certain period of time or the price set point is set by a user.

The instruction to set the power price linked mode may include an instruction to set the power price linked mode as a default mode in advance.

The at least one instruction may further include an instruction to select one of a plurality of on-grid operation modes excluding the default mode and the power price linked mode.

In addition, the at least one instruction may further include an instruction to select one of a plurality of on-grid operation modes, excluding the default mode and the power price linked mode.

The plurality of on-grid operation modes excluding the default mode and the power price linked mode may include at least one of a self-consumption maximization mode, a user customized mode, an emergency mode, a battery usage maximization mode, and a battery protection mode.

The at least one instruction may further include an instruction to select one of a plurality of off-grid operation modes when receiving power from the power grid is impossible, wherein the plurality of off-grid operation modes are operation modes that operate the energy storage system using at least one of a generator operation algorithm and a backup algorithm.

The operation control apparatus (300) may further include an input interface device (340), an output interface device (350), a storage device (360), etc. Respective components included in the operation control apparatus (300) may be connected by a bus (370) to communicate with each other.

In addition, the memory (or storage device) (320, 330) may be configured as at least one of a volatile storage medium and a nonvolatile storage medium. For example, the memory may be configured as at least one of a read only memory (ROM) and a random access memory (RAM).

The operations of the method according to the embodiments of the present disclosure may be implemented as a computer-readable program or code on a computer-readable recording medium. The computer-readable recording medium includes all types of recording devices in which data readable by a computer system is stored. In addition, the computer-readable recording medium may be distributed in a network-connected computer system to store and execute computer-readable programs or codes in a distributed manner.

Although some aspects of the disclosure have been described in the context of the apparatus, it may also represent a description according to a corresponding method, wherein a block or apparatus corresponds to a method step or feature of a method step. Similarly, aspects described in the context of a method may also represent a feature of a corresponding block or item or a corresponding apparatus. Some or all of the method steps may be performed by (or using) a hardware device, such as, for example, a microprocessor, a programmable computer, or an electronic circuit. In some embodiments, one or more of the most important method steps may be performed by such an apparatus.

In the forgoing, the present disclosure has been described with reference to the exemplary embodiment of the present disclosure, but those skilled in the art may appreciate that the present disclosure may be variously corrected and changed within the range without departing from the spirit and the area of the present disclosure described in the appending claims.

**Claims**

1. An apparatus for controlling operation of an energy storage system including a battery and an inverter and connected with a power grid, the apparatus comprising:

   at least one processor; and
   a memory configured to store at least one instruction executed by the at least one processor, wherein the at least one instruction includes:

   an instruction to, when power supply from the power grid is possible, set a power price linked mode according to a selection of an operator or a user;
   an instruction to set a reference power for the inverter of the energy storage system according to the power price linked mode; and
   an instruction to transmit the set reference power to the inverter,
   wherein, in the power price linked mode, charging and discharging of the energy storage system is controlled according to a price of power provided by the power grid.

2. The apparatus of claim 1, wherein, in the power price linked mode,

   during battery discharging, discharge amount of the battery is set to the highest when the power selling price is the highest, and
   during battery charging, charge amount of the battery is set to the highest when the power purchase price is the lowest.

3. The apparatus of claim 1, wherein the instruction to set a reference power for the inverter of the energy storage system according to the power price linked mode includes:

   an instruction to determine to perform discharging of the battery when the power purchase price exceeds a price set point; and
   an instruction to calculate discharge power to be used during battery discharging and to determine the reference power for the inverter.

4. The apparatus of claim 3, wherein the discharge power to be used during battery discharging is determined according to a ratio of a power selling price at the time of discharging to the highest power selling price gathered over a certain period of time.

5. The apparatus of claim 3, wherein the instruction to set a reference power for the inverter of the energy storage system according to the power price linked mode includes:

   an instruction to determine to perform charging of the battery when the power purchase price is less than the price set point; and
   an instruction to calculate charge power to be used during battery charging and to determine the reference power for the inverter.

6. The apparatus of claim 5, wherein the charge power to be used during battery charging is determined according to a ratio of the lowest power purchase price gathered over a certain period of time to a power purchase price at the time of charging.

7. The apparatus of claim 2, wherein the price set point is set as an average value of prices for purchasing power from the power grid in a certain period of time or the price set point is set by a user.

8. The apparatus of claim 1, wherein the instruction to set the power price linked mode includes:
an instruction to set the power price linked mode as a default mode in advance.

9. The apparatus of claim 8, wherein the at least one instruction further includes:
an instruction to select one of a plurality of on-grid operation modes excluding the default mode and the power price linked mode.

10. The apparatus of claim 9, wherein the plurality of on-grid operation modes excluding the default mode and the power price linked mode includes:
at least one of a self-consumption maximization mode, a user customized mode, an emergency mode, a battery usage maximization mode, and a battery protection mode.

11. The apparatus of claim 1, wherein the at least one instruction further includes:

An instruction to select one of a plurality of off-grid operation modes when power supply from the power grid is impossible, and
wherein the plurality of off-grid operation modes are operation modes that operate the energy storage system using at least one of a generator operation algorithm and a backup algorithm.

12. A method for controlling operation of an energy storage system including a battery and an inverter and connected with a power grid, the method comprising:

when power supply from the power grid is possible, setting a power price linked mode according to a selection of an operator or a user;
setting a reference power for the inverter of the energy storage system according to the power price linked mode; and
transmitting the set reference power for the inverter to the inverter,
wherein, in the power price linked mode, charging and discharging of the energy storage system is controlled according to a price of power provided by the power grid.

13. The method of claim 12, wherein in the power price linked mode,

during battery discharging, discharge amount of the battery is set to the highest when the power selling price is the highest, and
during battery charging, charge amount of the battery is set to the highest when the power purchase price is the lowest.

14. The method of claim 12, wherein the setting the reference power for the inverter of the energy storage system according to the power price linked mode includes:

determining to perform discharging of the battery when the power purchase price exceeds a price set point; and
calculating discharge power to be used during battery discharging and to determine the reference power for the inverter.

15. The method of claim 14, wherein the discharge power to be used during battery discharging is determined according to a ratio of a power selling price at the time of discharging to the highest power selling price gathered over a certain period of time.

16. The method of claim 14, wherein the setting the reference power for the inverter of the energy storage system according to the power price linked mode includes:

determining to perform charging of the battery when the power purchase price is less than the price set point; and
calculating charge power to be used during battery charging and determining the reference power for the inverter.

17. The method of claim 16, wherein the charge power to be used during battery charging is determined according to a ratio of the lowest power purchase price gathered over a certain period of time to a power purchase price at the time of charging.

18. The method of claim 13, wherein the price set point is set as an average value of prices for purchasing power from the power grid in a certain period of time or the price set point is set by a user.

19. The method of claim 12, wherein the setting the power price linked mode includes:
setting the power price linked mode as a default mode in advance.

20. The method of claim 19, further comprising:
selecting one of a plurality of on-grid operation modes excluding the default mode and the power price linked mode.

**21.** The method of claim 20, wherein the plurality of on-grid operation modes excluding the default mode and the power price linked mode includes:
at least one of self-consumption maximization mode, user customized mode, emergency mode, battery usage maximization mode, and battery protection mode.

**22.** The method of claim 12, further comprising:

selecting one of a plurality of off-grid operation modes when power supply from the power grid is impossible,
wherein the plurality of off-grid operation modes are operation modes that operate the energy storage system using at least one of a generator operation algorithm and a backup algorithm.

**23.** An energy storage system including a battery and connected to a power grid, the system comprising:

an operation control apparatus configured to, when power supply from the power grid is possible, set a power price linked mode according to a selection of an operator or a user, set a reference power for the inverter of the energy storage system according to the power price linked mode, and transmit the set reference power for the inverter to the inverter; and
an inverter configured to perform charge/-discharge control on the battery according to reference power received from the operation control apparatus,
wherein, in the power price linked mode, charging and discharging of the energy storage system is controlled according to a price of power provided by the power grid.

**24.** The energy storage system of claim 23, wherein in the power price linked mode,

during battery discharging, discharge amount of the battery is set to the highest when the power selling price is the highest, and
during battery charging, charge amount of the battery is set to the highest when the power purchase price is the lowest.

**25.** The energy storage system of claim 23, wherein the operation control apparatus determines to perform discharging of the battery when the power purchase price exceeds a price set point and calculates discharge power to be used during battery discharging and to determine the reference power for the inverter, and
wherein the operation control apparatus determines to perform charging of the battery when the power purchase price is less than the price set point and calculates charge power to be used during battery charging and determining the reference power for the inverter.

**26.** The energy storage system of claim 25, wherein the discharge power to be used during battery discharging is determined according to a ratio of a power selling price at the time of discharging to the highest power selling price gathered over a certain period of time.

**27.** The energy storage system of claim 25, wherein the charge power to be used during battery charging is determined according to a ratio of the lowest power purchase price gathered over a certain period of time to a power purchase price at the time of charging.

**28.** The energy storage system of claim 23, wherein the battery and the inverter are connected to a renewable energy generation system via a direct current (DC) link.

[Figure 1]

[Figure 2]

EP 4 641 867 A1

[Figure 3]

```
                                                    S300
                   Start

    S310                                  S321
         generator can be    Yes     perform generator
            connected ?              connection algorithm

            No
    S330                             S322
            Mode=3        Yes        perform backup
                                     algorithm

            No

                   End
```

[Figure 4]

```
                                                    S500
                   Start

    S510                                  S511
          operation mode     No      perform default
          selected by user?          mode operation

            Yes
    S520                             S540
            Mode=1        Yes        perform mode 1
                                     operation

            No
    S530                             S550
            Mode=2        Yes        perform mode 2
                                     operation

            No

                   End
```

[Figure 5]

[Figure 6]

$\lambda$grid,buy Max

discharge: discharge amount is set to the highest
when the power selling price to grid is the highest

$$P_{Dch_{set}}(t)=P_{max} * \frac{\lambda_{grid,sell}(t)}{\lambda_{grid,sell\ Max}}$$

power selling price ratio

$\lambda$grid,set  Default value for price set point is an average value,
but may be set by a user

charge: charge amount is set to the highest
when the power purchase price from grid is the lowest

$$P_{ch_{set}}(t)=P_{max} * \frac{\lambda_{grid,buy\ Min}}{\lambda_{grid,buy}(t)}$$

power purchase price ratio

$\lambda$grid,buy Min

[Figure 7]

EP 4 641 867 A1

Start

S541

$\lambda_{grid,buy} < \lambda_{set}$ — No →

Yes ↓

S543

WEssChaSet= $P_{max} * \dfrac{\lambda_{grid,buy\ Min}}{\lambda_{grid,buy}(t)}$

S545

GridtoESS_ENA =0 — No →

Yes ↓

S546

WEssRef= min(Wpv,WEssChaLim, WEssChaSet)

S547

WEssRef= min(WEssChaSet, WEssChaLim)

S542

$\lambda_{grid,buy} > \lambda_{set}$ — No →

Yes ↓

S544

WEssDiscSet= $P_{max} * \dfrac{\lambda_{grid,sell}(t)}{\lambda_{grid,sell\ Max}}$

S548

WEssRef= min(WEssDiscSet, WEssDiscLim)

S549

WEssRef=0

PWR_pri=1

End

[Figure 8]

power price fluctuation over time

Price Set-point : 32cent

selling price
purchase price

(cents/kWh)

EP 4 641 867 A1

[Figure 9]

22

[Figure 10]

## INTERNATIONAL SEARCH REPORT

| | International application No. |
|---|---|
| | **PCT/KR2024/009523** |

### A. CLASSIFICATION OF SUBJECT MATTER

**H02J 3/32**(2006.01)i; **H02J 3/38**(2006.01)i; **H02J 7/00**(2006.01)i; **H02J 7/35**(2006.01)i; **G06Q 50/06**(2012.01)i

According to International Patent Classification (IPC) or to both national classification and IPC

### B. FIELDS SEARCHED

Minimum documentation searched (classification system followed by classification symbols)

H02J 3/32(2006.01); G06F 1/26(2006.01); G06F 1/32(2006.01); G06Q 50/06(2012.01); G06Q 50/20(2012.01); H02J 7/34(2006.01); H02J 7/35(2006.01); H02M 7/48(2007.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 에너지 저장 시스템(energy storage system), 전력 계통(power system), 전력가격 (power price), 모드(mode), 인버터(inverter), 레퍼런스 전력(reference power)

### C. DOCUMENTS CONSIDERED TO BE RELEVANT

| Category* | Citation of document, with indication, where appropriate, of the relevant passages | Relevant to claim No. |
|---|---|---|
| X | JP 5584763 B2 (SHARP CORP.) 03 September 2014 (2014-09-03)<br>See paragraphs [0031]-[0066], claim 4 and figure 1. | 1,2,8-10,12,13, 19-21,23,24,28 |
| Y | | 3,5,7,11,14,16,18,22,25 |
| A | | 4,6,15,17,26,27 |
| Y | KR 10-2014-0090284 A (ELECTRONICS AND TELECOMMUNICATIONS RESEARCH INSTITUTE) 17 July 2014 (2014-07-17)<br>See paragraphs [0034]-[0040] and figures 1-4. | 3,5,7,14,16,18,25 |
| Y | JP 7269225 B2 (SMA SOLAR TECHNOLOGY AG) 08 May 2023 (2023-05-08)<br>See paragraph [0023]. | 11,22 |
| A | KR 10-1819253 B1 (LSIS CO., LTD.) 16 January 2018 (2018-01-16)<br>See paragraphs [0015]-[0042]. | 1-28 |

| ✓ | Further documents are listed in the continuation of Box C. | ✓ | See patent family annex. |
|---|---|---|---|

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **22 October 2024** | **23 October 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2024/009523** |

### C. DOCUMENTS CONSIDERED TO BE RELEVANT

| Category* | Citation of document, with indication, where appropriate, of the relevant passages | Relevant to claim No. |
| --- | --- | --- |
| A | US 2012-0316690 A1 (LI, Bo et al.) 13 December 2012 (2012-12-13)<br>See paragraphs [0017]-[0102]. | 1-28 |

Form PCT/ISA/210 (second sheet) (July 2022)

## INTERNATIONAL SEARCH REPORT
### Information on patent family members

International application No.

**PCT/KR2024/009523**

| Patent document cited in search report | | | Publication date (day/month/year) | Patent family member(s) | | | Publication date (day/month/year) |
|---|---|---|---|---|---|---|---|
| JP | 5584763 | B2 | 03 September 2014 | EP | 2587623 | A1 | 01 May 2013 |
| | | | | EP | 2587623 | B1 | 29 June 2016 |
| | | | | WO | 2011-162025 | A1 | 29 December 2011 |
| KR | 10-2014-0090284 | A | 17 July 2014 | None | | | |
| JP | 7269225 | B2 | 08 May 2023 | CN | 107612394 | A | 19 January 2018 |
| | | | | CN | 107612394 | B | 22 November 2019 |
| | | | | EP | 3682516 | A1 | 22 July 2020 |
| | | | | JP | 2020-533931 | A | 19 November 2020 |
| | | | | US | 11451165 | B2 | 20 September 2022 |
| | | | | US | 2020-0212825 | A1 | 02 July 2020 |
| | | | | WO | 2019-052875 | A1 | 21 March 2019 |
| KR | 10-1819253 | B1 | 16 January 2018 | KR | 10-2015-0025645 | A | 11 March 2015 |
| US | 2012-0316690 | A1 | 13 December 2012 | CN | 102208815 | A | 05 October 2011 |
| | | | | CN | 102208815 | B | 18 September 2013 |
| | | | | EP | 2553790 | A1 | 06 February 2013 |
| | | | | EP | 2553790 | B1 | 25 May 2016 |
| | | | | JP | 2013-524749 | A | 17 June 2013 |
| | | | | JP | 5600802 | B2 | 01 October 2014 |
| | | | | US | 9543761 | B2 | 10 January 2017 |
| | | | | WO | 2011-120435 | A1 | 06 October 2011 |

Form PCT/ISA/210 (patent family annex) (July 2022)

REFERENCES CITED IN THE DESCRIPTION

**Patent documents cited in the description**

- KR 1020230086958